# EUROPEAN PATENT APPLICATION

(11) **EP 0 735 306 A2**
(43) Date of publication of application: **02.10.1996**
(21) Application number: 96103064.0
(22) Date of filing: 29.02.1996
(51) Int. Cl.: F16L 37/092, F16L 37/084

(54) **Pipe couplings**

(30) Priority: 27.03.1995 GB 9506183
(71) Applicant: Glynwed Plastics Limited, Cannock, Staffordshire WS11 3NS (GB)
(72) Inventor: Barfield, Malcolm Raymond, Essington, WV11 2DU (GB)
(74) Representative: Lesley, Sheila F.

(57) **Abstract**

In pipe couplings of the kind providing, within a socket (1, 2) to receive a pipe end (21), a grab ring (3) for engagement with the inserted pipe end (21), the grab ring (3) cooperating with an internally tapering or undercut portion of the socket, the internally tapering socket part (1) is formed separately from an annular central body part (2) which is welded to the tapering part (1) after assembly of the grab ring (3) and associated seals (4), if any, therein. The central body part (2) may carry an inner tubular portion (25) adapted to fit within the inserted pipe end and accommodating sealing rings (8) in peripheral grooves for sealing engagement with the interior surface of the inserted pipe end (21).

## Description

THIS INVENTION relates to pipe couplings of the type which can be fixed to pipes simply by insertion of the pipes into the couplings without the need for screw threaded unions or the like.

British Patent No. 2166508 in the name of Glynwed Tubes and Fittings Limited discloses a pipe coupling providing a socket to receive a pipe end and, within the socket, a flexible seal received within a circumferential internal groove in the socket to make sealing engagement with the exterior of the pipe and, spaced axially from the seal and adjacent the free end of the socket, an internally toothed, axially split "grab-ring" received within a peripheral recess in the interior of the socket, the "grab-ring", in its unstressed state, having an internal diameter less than the external diameter of the pipe, the recess and the grab-ring having cooperating frusto-conically tapering cam faces such that axial movement of the grab-ring towards the free end of the socket produces circumferential contraction of the grab-ring about the pipe to permit such contraction.

The coupling of British Patent No. 2166508 is intended primarily for use with plastics pipe of defined external diameter.

It is an object of the present invention to provide a pipe coupler or joint which offers the advantages of the coupling of British Patent No. 2166508 but which is adaptable to different types of pipe.

According to one aspect of the invention, there is provided a pipe coupling comprising a female pipe part for receiving an inserted male pipe part and also comprising a male tubular part for engagement within such inserted male pipe part, the coupling further including a so-called "grab" ring located in an undercut portion of the interior of the female pipe part, so as to be disposed on the exterior of such inserted male pipe part, the "grab" ring having a tapered external surface which engages a surface or edge in the undercut portion of the interior of the female pipe part, or the female pipe part having, in said undercut portion of its interior, a tapered internal surface which engages a surface or edge of said grab ring, sealing means being provided around said male tubular part whereby when such male pipe part is inserted within said female pipe part and over said male tubular part, the inserted pipe will be sealed with respect to the coupling by cooperation of said sealing means between the interior of the inserted male pipe part and the male tubular part, whilst the inserted male pipe part will be inserted through the grab-ring, which will engage the periphery of the inserted male pipe part and whereby, when the male pipe part is urged out of the female pipe part, either by fluid pressure or some other action, the grab-ring will be caused to ride along said tapered surface in the undercut portion of the female pipe part or the tapered surface of the grab ring (where provided) will be caused to ride along said edge or surface of the female pipe part, the grab ring, in either case, being thus caused to grip more firmly the inserted male pipe part.

According to another aspect of the invention, there is provided a pipe coupling comprising a female pipe part for receiving a male pipe part and also comprising a resilient "grab" ring located with the female pipe part, the interior of the female pipe part being undercut to hold said grab ring captive, and wherein said female pipe part includes an annular central body part of substantial radial thickness and an end piece secured to said central body part, said end piece providing first and second opposite open ends, the first open end forming the open end of the pipe coupling for receiving such male pipe part and said second open end being of substantially greater internal diameter than said first end and of a size to receive at least a portion of said central body part, whereby, in assembly of the coupling, the grab-ring can be inserted into the interior of said end piece from said second end, said central body part subsequently inserted in said second end and said end piece subsequently welded to said central body part.

Embodiments of the invention are described below by way of example with reference to the accompanying drawings, in which:
FIGURE 1 is an exploded perspective view of a pipe coupling embodying the invention,
FIGURE 2 is a partial, half-axial section of the pipe coupling of Figure 1,
FIGURE 3 is a partial, half-axial section of a pipe coupling differing from that of Figure 2 only in the form of the outer sealing member,
FIGURE 4 is a perspective view of a pipe joint incorporating the coupling of Figures 1 to 3 and illustrating use of a de-mounting tool to dis-assemble the joint,
FIGURE 5A is an end elevation view of a grab-ring forming part of the coupler of Figures 1 to 4,
FIGURE 5B is a view in section along the line A-A of Figure 5A - and - FIGURES 6, 7, 8 and 9 are respective, similar, partial, half-axial views of respective embodiments of pipe joints in accordance with the invention.

In the drawings, and in the following description, like reference numerals denote like parts.

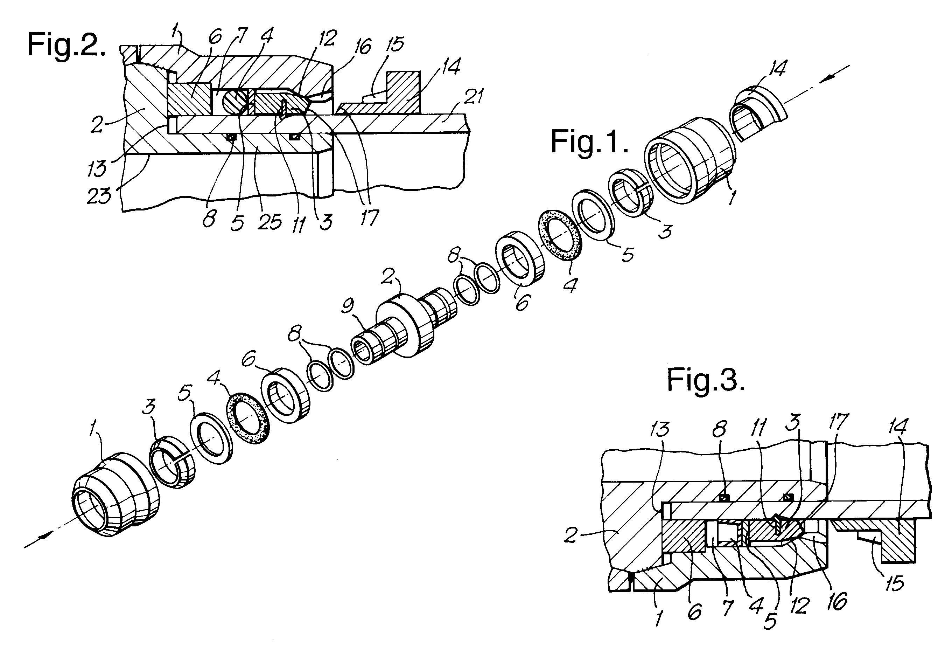

The demountable coupler illustrated in Figures 1 to 5B is intended for use with "standard" copper or with composite pipe of the type comprising a metallic tube coated internally and externally with plastics.

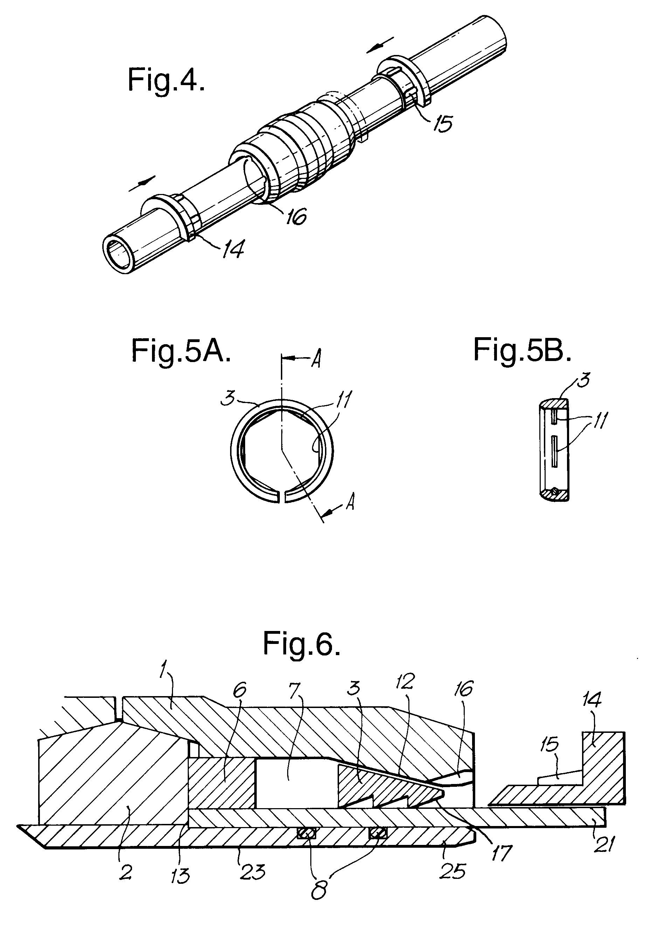

The coupler shown in Figures 1 to 5B, consists of two hollow tubular plastics end pieces 1 ultrasonically welded to a plastics body member 2 having a bore 23 therethrough. The body member 2 as initially formed has a central region of relatively large outer diameter from either end of which extends a respective integral tubular portion 25 of relatively small outer diameter, which outer diameter is substantially constant apart from two circumferential grooves in its outer peripheral surface to receive "O" rings 8. Each end piece 1 as originally formed has a cylindrical recess extending into its inner end and which receives as an interference fit a respective end part of the central region of the body member 2. The end pieces 1, thus fitted onto the respective end parts of the central region of the body member are ultrasonically welded to the central region of the body member after assembly of the coupling with the other components referred to below. It will be understood that there is thus defined between each end piece 2 and the respective smaller outer diameter tubular portion, a respective annular space 7. Whilst, in the drawings, the boundary between the central region of the body member 2 and the respective end piece 1 is shown as being inclined with respect to the longitudinal axis of the fitting, implying a frusto-conical form for the respective surfaces, it is preferred that, as noted above, the respective surfaces are cylindrical prior to ultrasonic welding. A similar effect could be provided by retaining a frusto-conically external surface on the grab ring and forming the interior of the end piece 1 to provide an annular edge (which may be a square edge) cooperating with the frusto-conical surface of the grab ring. A respective grab-ring 3, seal 4, anti-extrusion ring 5 and spacer 6 sit in each of the annular spaces 7. The seal 4 can be of any suitable type, for example an "O" ring as shown in Figure 2, or a "U" section seal as shown in Figure 3. In Figure 1, the coupler is shown in exploded perspective view for purposes of illustration although it will be appreciated that after assembly of the coupler and ultrasonic welding of end pieces 1 to body member 2, non-destructive disassembly of the coupler is not possible. Figure 2 is a half axial section, partial view of the assembled coupler with a pipe 21 inserted in one end of the coupler. Since the coupler is symmetrical about a plane midway between its ends extending perpendicular to its longitudinal axis, substantially only the part of the coupling to one side of such plane is shown in Figures 2 and 3. This applies also to Figures 6 to 9. The coupler of Figure 3 is identical with that of Figure 2 except for the form of seal 4. The pipe 21 is a close sliding fit on the respective tubular portion 25.

The grab-ring 3 is a split polymeric ring into which is moulded a plurality of metal teeth 11. As shown in Figures 2 and 3, the internal bore or passage through each end piece 1 includes an intermediate portion of uniform diameter which meets with a frusto-conical cam surface 12 which reduces in diameter towards the free end of the respective end piece. Each grab-ring 3 has, in an unstressed state, an outer diameter which is less than the diameter of said uniform-diameter intermediate portion of the bore through the end piece but is greater than the minimum internal diameter of the end piece 1, adjacent the free end of the latter, so that the grab-ring is held captive within the end piece 1.

The grab-ring 3 has, extending towards its axial end nearer the open end of the end piece 1, an exterior cam surface tapering toward the axis of the fitting in the direction towards said open end of the end piece, for cooperation with the cam surface 12 and also has, extending towards the same axial end, an interior cam surface 17 flaring outwardly away from the axis of the fitting, in the direction toward said open end, for cooperation with a demounting tool 14. When the pipe 21 is inserted (from the right in Figures 2 and 3) into the annular space 7, the pipe end, by engagement with the frusto-conically inclined surface 17 of ring 3 and subsequent engagement with the teeth 11, urges the ring 3 inwardly away from the free end of the coupling until axial movement of ring 3 is restrained by engagement of ring 3 with anti-extrusion ring 5, in turn engaging sealing ring 4, in turn engaging spacer 6. Further insertion of the pipe end forces the ring 3 to spring radially outwardly, i.e. to expand, allowing the pipe to pass through the ring 3 until the pipe end engages the end face 13 of the central region of body member 2. Thus, insertion of the pipe 21 causes the grab-ring 3 to activate such that the metal teeth 11 grip the pipe's outside diameter. Subsequent application of the system pressure causes the pipe and grab-ring 3 to move axially until the grab-ring 3 interacts with the cam surface 10. This causes the grab-ring 3 to contract radially inwardly thereby reinforcing the gripping mechanism which retains the pipe in the coupler. In a variant, and currently preferred construction, not shown, the grab ring 3 does not have an exterior cam surface as shown but is externally cylindrical over its whole axial extent, meeting the perpendicular outer end face of the grab ring in a square edge which cooperates with the cam surface 12. This arrangement allows the grab ring to activate and to become effective in a much shorter axial movement of the inserted pipe that with the arrangement illustrated in Figures 1 to 5B.

The coupler is intended for use with composite pipe which is known to delaminate if the system fluid contact the pipe's end. This is prevented by sealing on the internal diameter of the pipe, by means of "O" rings 8, thereby isolating the pipe's end from the system fluid. Upon insertion, the composite pipe is pushed firmly over the tubular portion 25 of the body member 2 until the pipe butts up against the end face 13 of the central part of body member 2, which end face 13 thus forms a pipe stop. The O-rings 8 are compressed between the body member 2 and pipe's internal diameter thereby producing an effective hydraulic seal.

The seal 4 is compressed between the pipe's exterior and the internal surface of the end piece 2 thereby producing an effective hydraulic seal which is further improved by the application of system pressure. The spacer 6 ensures that the seal 4 is retained in the correct position such that the pipe can be fully inserted through the seal 4. The anti-extrusion ring 5 facilitates sealing and protects the seal 4 from damage.

In some instances it may be necessary to use both copper and composite pipe in the same system. It is therefore preferred that the coupler should be wholly compatible with both types of pipe. As the internal diameter of a copper pipe will generally be greater than that of an equivalent composite pipe, (since it is the external diameter which is standardised), the O-rings 8 will not produce an effective seal with the equivalent copper pipe. The additional seal 4, which may be of any suitable type ("O" ring, as shown in Figure 2; "U" seal, as shown in Figure 3) is thus included to provide a means of sealing on the pipe's outside diameter. The gripping mechanism of the coupler, as described above, requires no modification for use with copper pipe.

The coupler can be demounted by means of a separate demounting tool 14 which comprises a longitudinally split annular member, (or alternatively a part-annular member) of the form illustrated in Figure 4 and including a collar portion from which extends a sleeve portion of small radial thickness and which conforms closely with the pipe surface when the demounting tool is applied to the pipe. The end of the sleeve portion remote from the collar portion is formed as a frusto-conically tapering cam surface complementary with the internal cam surface 17 at the outer end of the grab-ring 3. Ribs 15 extend longitudinally over the outer surface of the sleeve portion from the collar portion. When it is necessary to release pipe 21 from the coupling, the demounting tool 12 is clipped over the pipe and the ribs 15 aligned with corresponding grooves 16 in the end piece 1. The demounting tool 14 is moved axially into the coupler until the grab-ring 3 is pushed back from the cam surface 10. The tapering cam surface of the demounting tool 14 interacts with the cam surface 17 of the grab-ring 3 so as to cause the grab-ring 3 to open up in the annular space 7. Retaining the demounting tool 14 and grab-ring 3 in this position removes the gripping force on the pipe 21 thereby allowing the pipe to be withdrawn. The coupler design is therefore inherently tamperproof as release of the pipe is not possible without the use of the demounting tool 14.

The coupler is manufactured using standard injection moulding techniques from any polymeric material possessing suitable processing and in-service characteristics. Production of the coupler as a single moulding would be difficult due to the reverse draft angle of the cam surfaces 12. The coupler is therefore manufactured as a number of simplified components which are subsequently welded together by standard ultrasonic means. The internal components of the coupler (the grab-ring 3, seal 4, anti-extrusion ring 5 and spacer 6) are inserted in the end pieces 1 prior to fitting the end pieces 1 onto body member 2 and the subsequent ultrasonic welding process.

The demountable coupler shown in partial half-axial section in Figure 6 is intended for use with composite pipe of the type referred to above comprising a metallic tube coated internally and externally with plastics.

The pipe coupler shown in Figure 6 differs from that of Figures 1 to 4 principally in the form of the grab-ring 3, which in this instance is formed entirely of polymeric material.

The grab-ring 3 is again axially split and has integral tooth formations in the form of angled surfaces extending radially inwardly from the body of the grab-ring. Furthermore, in this case the entire outer peripheral surface of the grab-ring is formed as a frusto-conical tapering surface complementary with the cam surface 12 of the respective end piece 1. The grab-ring 3 again provides internally, adjacent the open end of the fitting, a frusto-conically flaring surface 17 engagable by the complementary frusto-conical surface at the end of the demounting tool 14. The seal 4 and anti-extrusion ring 5 may in this case be dispensed with and may be replaced by a further spacer (not shown) accommodated in space 7 between spacer 4 and the grab-ring 3. Alternatively, the spacer 4 may be extended axially as compared with the spacer 4 in Figures 1 to 4.

Operation of the coupler, and de-mounting, are substantially as described with reference to Figures 1 to 4.

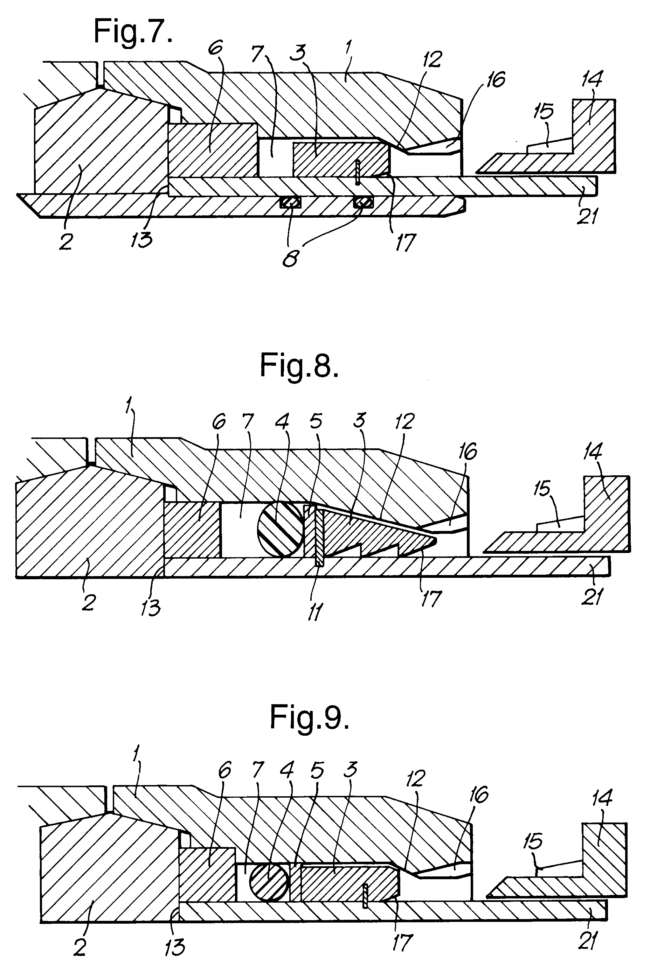

The pipe coupler shown in Figure 7 is again intended for use with composite pipe of the type comprising a metallic tube coated both internally and externally with a polymeric material, and differs from that of Figures 2 to 4 only in respect of the form of the grab-ring 3 and the omission of the "O" ring 4 - and anti-extrusion ring, etc.

The coupler shown in Figure 8 is intended for use with "standard" copper and polymeric pipe. The coupler shown in Figure 8 differs from that of Figures 1 to 7 in lacking the inner tubular portions 25 of the body member 2 and consequently lacking the "O" rings 8. The "O" ring 4, anti-extrusion ring and grab-ring 3 are however retained. In the case of copper pipe a purely polymeric grab-ring is unsuitable. Accordingly, a grab-ring is again used possessing a plurality of metal teeth 11 moulded onto the back of a polymeric split-ring as shown in Figure 8, the form of the grab-ring being otherwise as described with reference to Figure 6.

The coupler is intended for use with both copper and polymeric pipe. Upon insertion, the pipe is pushed firmly into the coupler through the grab-ring 3, seal 4, anti-extrusion ring 5, and spacer 6 until it butts up against the pipe stop 13. The seal 4 is compressed between the pipe's outside diameter and the peripheral wall of the annular space 7 thereby producing an effective hydraulic seal which is further improved by the application of system pressure. The spacer 6 ensures that the seal 4 is retained in the correct position such that the pipe can be fully inserted through the seal 4. The anti-extrusion ring 5 facilitates sealing and protects the seal 4 from damage.

The demountable coupler illustrated in Figure 9 is again intended for use of "standard" copper and polymeric pipe.

The coupler of Figure 9 differs from that of Figures 1 to 4 principally in that the uniform diameter tubular portions 25 of the body member 2 are eliminated and in that the internal diameter of the remaining portion of the body member 2 corresponds with that of the pipe 21. Thus, in this case, sealing is effected by the "O" ring 4 located between the interior of end part 1 and the exterior of pipe 25.

The grab-ring 3 in Figure 9 again is a split polymeric carrier into which is moulded a plurality of metal teeth 11. The grab-ring in Figure 9 is similar in form to that in Figures 1 to 4. Insertion of the pipe causes the grab-ring 3 to activate such that the metal teeth 11 grip the pipe's outside diameter. Application of the system pressure causes the pipe and grab-ring 3 to move axially until the grab-ring 3 interacts with the cam surface 12. This causes the grab-ring 3 to close down thereby reinforcing the gripping mechanism which retains the pipe in the coupler.

The coupler is intended for use with both copper and polymeric pipe. Upon insertion, the pipe is pushed firmly into the coupler through the grab-ring 3, seal 4, anti-extrusion ring 5, and spacer 6 until it butts up against the pipe stop 13. The seal 4 is compressed between the pipe's outside diameter and the peripheral wall of the annular space 7 thereby producing an effective hydraulic seal which is further improved by the application of system pressure. The spacer 6 ensures that the seal 4 is retained in the correct position such that the pipe can be fully inserted through the seal 4. The anti-extrusion ring 5 again facilitates sealing and protects the seal 4 from damage.

It will be appreciated that in some cases it may be desired to connect two different types of pipe end to end and that for such cases there may be provided for example, a pipe coupling one half of which has, in axial section, the form shown in Figure 2 and the other half of which has, in axial section, the form shown in Figure 8. Similarly, pipe couplings may be provided which similarly combine any two of the forms illustrated in Figures 2, 6, 7, 8 or 9.

The features disclosed in the foregoing description, in the following claims and/or in the accompanying drawings may, both separately and in any combination thereof, be material for realising the invention in diverse forms thereof.

## Claims

1. A pipe coupling comprising a female pipe part for receiving an inserted male pipe part and also comprising a male tubular part for engagement within such inserted male pipe part, the coupling further including a so-called "grab" ring located in an undercut portion of the interior of the female pipe part, so as to be disposed on the exterior of such inserted male pipe part, the "grab" ring having a tapered external surface which engages a surface or edge in the undercut portion of the interior of the female pipe part, or the female pipe part having, in said undercut portion of its interior, a tapered internal surface which engages a surface or edge of said grab ring, sealing means being provided around said male tubular part whereby when such male pipe part is inserted within said female pipe part and over said male tubular part, the inserted pipe will be sealed with respect to the coupling by cooperation of said sealing means between the interior of the inserted male pipe part and the male tubular part, whilst the inserted male pipe part will be inserted through the grab-ring, which will engage the periphery of the inserted male pipe part and whereby, when the male pipe part is urged out of the female pipe part, either by fluid pressure or some other action, the grab-ring will be caused to ride along said tapered surface in the undercut portion of the female pipe part or the tapered surface of the grab ring (where provided) will be caused to ride along said edge or surface of the female pipe part, the grab ring, in either case, being thus caused to grip more firmly the inserted male pipe part.

2. A pipe joint comprising the pipe coupling of Figure 1 with an inserted male pipe part fitting closely over said male tubular portion and received as an interference fit within said grab-ring.

3. The pipe coupling of claim 1, further including a sealing member disposed, within said female pipe part, further than said grab-ring from the open end of the female pipe part than said grab ring, said sealing member cooperating sealingly with the internal surface of said female pipe part and being spaced radially from said male tubular portion to allow space for passage of a said inserted male pipe part.

4. A pipe coupling comprising a female pipe part for receiving a male pipe part and also comprising a resilient "grab" ring located with the female pipe part, the interior of the female pipe part being undercut to hold said grab ring captive, and wherein said female pipe part includes an annular central body part of substantial radial thickness and an end piece secured to said central body part, said end piece providing first and second opposite open ends, the first open end forming the open end of the pipe coupling for receiving such male pipe part and said second open end being of substantially greater internal diameter than said first end and of a size to receive at least a portion of said central body part, whereby, in assembly of the coupling, the grab-ring can be inserted into the interior of said end piece from said second end, said central body part subsequently inserted in said second end and said end piece subsequently welded to said central body part.

5. A method of manufacturing a pipe coupling comprising a female pipe part for receiving a male pipe part and also comprising a resilient "grab" ring located with the female pipe part, the interior of the female pipe part being undercut to hold said grab ring captive, and wherein said female pipe part includes an annular central body part of substantial radial thickness and an end piece secured to said central body part, said end piece providing first and second opposite open ends, the first open end forming the open end of the pipe coupling for receiving such male pipe part and said second open end being of substantially greater internal diameter than said first end and of a size to receive at least a portion of said central body part, whereby, in assembly of the coupling, the grab-ring can be inserted into the interior of said end piece from said second end, said central body part subsequently inserted in said second end and said end piece subsequently welded to said central body part.

6. A pipe joint incorporating a pipe coupling according to claim 4 or made by the method of claim 5.

7. A grab-ring for a pipe-coupling, comprising a split annular polymeric body having at least one tooth of harder material than said body moulded into said body and projecting therefrom on the interior of the ring.
